# EUROPEAN PATENT APPLICATION

(11) **EP 4 807 868 A1**
(43) Date of publication of application: **16.09.2026**
(21) Application number: 25743688.1
(22) Date of filing: 23.01.2025
(51) Int. Cl.: H01M 50/211

(54) **BATTERY DEVICE, ENERGY STORAGE DEVICE, ENERGY STORAGE SYSTEM, ELECTRIC DEVICE AND CHARGING NETWORK**

(71) Applicant: CONTEMPORARY AMPEREX TECHNOLOGY (HONG KONG) LIMITED, Hong Kong (HK)
(72) Inventor: ZHENG, Linxin, Ningde, Fujian 352100 (CN); QIAN, Ou, Ningde, Fujian 352100 (CN); LI, Yao, Ningde, Fujian 352100 (CN)
(74) Representative: Gong, Jinping
(86) International application number: PCT/CN2025/074352
(87) International publication number: WO 2026/156611

(57) **Abstract**

A battery apparatus (100), an energy storage apparatus (1), an energy storage system (1000), an electric apparatus, and a charging network (2000) are disclosed. The battery apparatus (100) includes an energy unit (70). The energy unit (70) includes a housing (71) and a pouch battery cell (20), where the pouch battery cell (20) is located in the housing (71), and the pouch battery cell (20) includes a pouch housing (21), an electrode assembly, and an electrode lead-out portion (22); the electrode assembly is sealed in the pouch housing (21); the electrode lead-out portion (22) is at least partially located in the pouch housing (21) to be connected to the electrode assembly; and the pouch housing (21) is provided with a sealing portion (211) at an end portion in a first direction, and the electrode lead-out portion (22) is at least partially exposed from the sealing portion (211). The battery apparatus (100) further includes a liquid collection structure (30), where the liquid collection structure (30) is correspondingly disposed at an end portion of the pouch battery cell (20) in the energy unit (70) in the first direction, and the liquid collection structure (30) is located below the sealing portion (211).

## Description

### TECHNICAL FIELD

This application relates to the field of batteries, and specifically, to a battery apparatus, an energy storage apparatus, an energy storage system, an electric apparatus, and a charging network.

### BACKGROUND

Energy conservation and emission reduction are crucial to sustainable development of the automobile industry. Electric vehicles, with their advantages in energy conservation and emission reduction, have become an important part of sustainable development of the automobile industry. For electric vehicles, battery technology is an important factor in connection with their development.

In the related art, a battery apparatus may include a plurality of pouch battery cells. The pouch battery cell is a battery cell packaged in a flexible shell, with an aluminum-plastic film typically used as a shell material, and features light weight, thin profile, and high energy density. However, for the pouch battery cell, sealing positions on two sides where tabs protrude are weak regions of the aluminum-plastic film shell, which are prone to damage and liquid leakage, leading to safety hazards.

### SUMMARY

In view of the foregoing problems, this application provides a battery apparatus, an energy storage apparatus, an energy storage system, an electric apparatus, and a charging network, which can alleviate the problems of safety hazards caused by damage and liquid leakage at sealing positions of a pouch battery cell where tabs protrude.

According to a first aspect, this application provides a battery apparatus. The battery apparatus includes:
an energy unit, where the energy unit includes a housing and a pouch battery cell; the pouch battery cell is located in the housing, and the pouch battery cell includes a pouch housing, an electrode assembly, and an electrode lead-out portion; the electrode assembly is sealed in the pouch housing; the electrode lead-out portion is at least partially located in the pouch housing to be connected to the electrode assembly; and the pouch housing is provided with a sealing portion at an end portion in a first direction, and the electrode lead-out portion is at least partially exposed from the sealing portion; and
a liquid collection structure, where the liquid collection structure is correspondingly disposed at an end portion of the pouch battery cell in the energy unit in the first direction, and the liquid collection structure is located below the sealing portion.

In the technical solutions of embodiments of this application, the liquid collection structure is correspondingly disposed at the end portion of the pouch battery cell in the energy unit in the first direction and is located below the sealing portion. This allows the liquid collection structure to collect liquid leaking from the pouch battery cell due to the damage to the sealing portion, alleviating the impact caused by the liquid leakage of the pouch battery cell to some extent, thereby improving the reliability and safety of the battery apparatus.

In some embodiments, the electrode lead-out portion includes a first electrode lead-out portion and a second electrode lead-out portion, where the first electrode lead-out portion and the second electrode lead-out portion are respectively located at two ends of the pouch battery cell in the first direction; the sealing portion includes a first sealing portion and a second sealing portion; the first sealing portion is disposed corresponding to the first electrode lead-out portion, and the first electrode lead-out portion is at least partially exposed from the first sealing portion; and the second sealing portion is disposed corresponding to the second electrode lead-out portion, and the second electrode lead-out portion is at least partially exposed from the second sealing portion; and
the liquid collection structure includes a first liquid collection structure and a second liquid collection structure; the first liquid collection structure corresponds to the first sealing portion in the first direction and is located below the first sealing portion; and the second liquid collection structure corresponds to the second sealing portion in the first direction and is located below the second sealing portion.

In the above embodiments, the first liquid collection structure and the second liquid collection structure can collect an electrolyte leaking from the first sealing portion and the second sealing portion due to the damage. This can, to some extent, avoid the problems such as system-level short circuits, corrosion, and even battery failure and sparking, thereby improving the reliability and safety of the battery apparatus.

In some embodiments, the energy unit includes a plurality of pouch battery cells placed in the housing; the housing is provided with first openings on two sides in the first direction; the battery apparatus further includes two insulating members; the two insulating members respectively cover the first openings on the two sides; and the first liquid collection structure and the second liquid collection structure are respectively disposed on the two insulating members.

In the above embodiments, the first liquid collection structure and the second liquid collection structure can be respectively disposed on the two insulating members, so that when electrolyte leakage occurs at the first sealing portion and the second sealing portion, the electrolyte can be collected in a timely manner. This can, to some extent, avoid the problems such as system-level short circuits, corrosion, and even battery failure and sparking, thereby improving the reliability and safety of the battery apparatus.

In some embodiments, the battery apparatus includes a box; the housing further includes a second opening facing an inner bottom wall of the box; an insulating adhesive is provided between the pouch battery cell and the inner bottom wall of the box; the insulating adhesive at least partially penetrates the second opening to connect the pouch battery cell and the inner bottom wall of the box in an insulation manner; the liquid collection structure includes a liquid collection tank; a minimum distance between a bottom wall of the liquid collection tank and the inner bottom wall of the box is less than a maximum distance between an upper surface of the insulating adhesive and the inner bottom wall of the box.

In the above embodiments, the minimum distance between the bottom wall of the liquid collection tank and the inner bottom wall of the box is less than the maximum distance between the upper surface of the insulating adhesive and the inner bottom wall of the box, so that when electrolyte leakage occurs, the electrolyte ultimately reaches the lower liquid collection tank, thereby implementing the collection of the leaked electrolyte.

In some embodiments, the electrode lead-out portion includes a first electrode lead-out portion and a second electrode lead-out portion, where the first electrode lead-out portion and the second electrode lead-out portion are spaced apart at a first end portion of the pouch battery cell in the first direction; the sealing portion includes a first sealing portion located at the first end portion; and the first electrode lead-out portion and the second electrode lead-out portion are both at least partially exposed from the first sealing portion; and
the liquid collection structure includes a first liquid collection structure, where the first liquid collection structure corresponds to the first sealing portion in the first direction and is located below the first sealing portion.

In the above embodiments, the first liquid collection structure can collect the electrolyte leaking due to the damage to the first sealing portion. This means that the first electrode lead-out portion and the second electrode lead-out portion can share the first liquid collection structure. This can, to some extent, avoid the problems such as system-level short circuits, corrosion, and even battery failure and sparking, thereby improving the reliability and safety of the battery apparatus. In addition, this can reduce space and material consumption required for a plurality of additional liquid collection structures, thereby optimizing the space utilization of the battery apparatus.

In some embodiments, the liquid collection structure includes a flow guide groove and a liquid storage portion, where the flow guide groove is located below the sealing portion; the liquid storage portion is located on a side of the flow guide groove facing away from the pouch battery cell; and the flow guide groove is in communication with the liquid storage portion.

In the above embodiments, with combination of the flow guide groove and the liquid storage portion, the liquid collection structure can more effectively guide and collect the electrolyte leaking when the sealing portion of the pouch battery cell is damaged. This can prevent the electrolyte from spreading to other regions to some extent, thereby improving the safety and reliability of the battery apparatus and optimizing the space utilization.

In some embodiments, the battery apparatus includes a detection member, where the detection member is at least partially located in the liquid collection structure, and the detection member is configured to detect liquid in the liquid collection structure.

In the above embodiments, the detection member is at least partially located in the liquid collection structure and configured to detect an electrolyte in the liquid collection structure. This can ensure the effective sensing of electrolyte leakage to some extent and transmit a detection result to a control system or an alarm system, thereby improving the safety and reliability of the battery apparatus.

In some embodiments, a plurality of pouch battery cells are arranged along a second direction; the liquid collection structure includes a flow collection channel, where the flow collection channel extends along the second direction to be located below sealing portions of all of the plurality of pouch battery cells; and the second direction is perpendicular to the first direction.

In the above embodiments, the flow collection channel extends along the second direction to be located below the sealing portions of all of the plurality of pouch battery cells, so that a battery cell module can be formed to increase the overall energy storage capacity of the battery apparatus, satisfying the energy requirements. In addition, the flow collection channel can collect an electrolyte leaking from the module. This can prevent the electrolyte from spreading to other regions to some extent, thereby improving the safety and reliability of the battery apparatus.

In some embodiments, the battery apparatus includes a detection member, where the detection member is at least partially located in the flow collection channel, and the detection member is configured to detect liquid in the flow collection channel.

In the above embodiments, the detection member is at least partially located in the flow collection channel and configured to detect an electrolyte in the flow collection channel. This can ensure the effective sensing of electrolyte leakage to some extent and transmit a detection result to a control system or an alarm system, thereby improving the safety and reliability of the battery apparatus.

In some embodiments, a bottom wall of the flow collection channel is provided with a recess, and the detection member is disposed in the recess.

In the above embodiments, the bottom wall of the flow collection channel is provided with the recess, and the detection member is disposed in the recess, so that the leaked electrolyte can be collected in the recess, thereby allowing the detection member to more rapidly and accurately sense the electrolyte.

In some embodiments, along the second direction, a bottom wall of at least one side of the recess is inclined toward the recess.

In the above embodiments, along the second direction, the bottom wall of the at least one side of the recess is inclined toward the recess. This can guide the electrolyte to flow into the recess, thereby improving the detection sensitivity of the electrolyte and accelerating response time to some extent, and helping to improve the overall safety and reliability of the battery apparatus.

In some embodiments, along the second direction, an inclination angle of a bottom wall of either side of the recess toward the recess along the second direction is R, where 0°<R≤10°.

In the above embodiments, the inclination angle R satisfying 0°<R≤10° can ensure the electrolyte collection efficiency in different leakage scenarios to some extent, thereby improving the safety and reliability of the battery apparatus. In addition, this can, to some extent, avoid the problem of a large thickness of the liquid collection structure in a third direction when the inclination angle is larger than 10°.

In some embodiments, 5°≤R≤10°.

In the above embodiments, the inclination angle R satisfying 5°≤R≤10° allows the electrolyte to flow toward the recess more rapidly. This reduces the retention time of the liquid in the flow collection channel and implements the rapid accumulation of the leaked electrolyte, thereby improving the detection sensitivity of the electrolyte and accelerating response time to some extent, and helping to improve the overall safety and reliability of the battery apparatus. In addition, this can, to some extent, avoid the problem of the large thickness of the liquid collection structure in the third direction when the inclination angle is larger than 10°.

In some embodiments, a width of the flow collection channel is x, where 0.5 cm≤x≤3 cm.

In the above embodiments, the width x of the flow collection channel satisfying 0.5 cm≤x≤3 cm can ensure the electrolyte collection efficiency in different leakage scenarios to some extent, thereby improving the safety and reliability of the battery apparatus. In addition, this can, to some extent, avoid the problem of a large size of the liquid collection structure in the first direction when the width x of the flow collection channel is greater than 3 cm.

In some embodiments, 0.5≤x≤1 cm.

In the above embodiments, the width x of the flow collection channel satisfying 0.5≤x≤1 cm can provide a flowing path for the leaked electrolyte, reduce the space used, and improve the compactness of the battery apparatus. In addition, this allows the liquid collection structure to occupy less space and is conducive to improving the compactness of the battery apparatus.

In some embodiments, a depth of the flow collection channel is h, where 0<h≤1 cm.

In the above embodiments, the depth h of the flow collection channel satisfying 0<h≤1 cm can provide a flowing path for the leaked electrolyte and ensure the electrolyte collection efficiency in different leakage scenarios to some extent, thereby improving the safety and reliability of the battery apparatus.

In some embodiments, the battery apparatus includes a battery management system, where the battery management system is electrically connected to the detection member; and the detection member is configured to send an alarm signal to the battery management system when liquid leakage is detected.

In the above embodiments, the battery management system is electrically connected to the detection member. When detecting electrolyte leakage, the detection member can provide an alarm or feedback information to the battery management system in a timely manner. This facilitates the battery management system in taking safety measures in a timely manner, such as controlling the pouch battery cell experiencing electrolyte leakage to be powered off (stopping charging or discharging).

In some embodiments, the battery apparatus further includes a liquid absorption member, where the liquid absorption member is located in the liquid collection structure.

In the above embodiments, the liquid absorption member is located in the liquid collection structure, which can ensure the timely absorption of the electrolyte to some extent when electrolyte leakage occurs at the battery apparatus.

In some embodiments, the pouch battery cell is any one of a lithium iron phosphate battery cell, a ternary battery cell, and a solid-state battery cell.

In the above embodiments, in an embodiment where the application is configured as a lithium iron phosphate battery cell, the reliability of the pouch battery cell can be improved, and the cycle life of the pouch battery cell can be extended. In an embodiment where the application is configured as a ternary lithium battery cell, the energy density of the pouch battery cell can be increased, and the endurance range can be extended. In an embodiment where the application is configured as a solid-state pouch battery cell, the energy density can be increased, and the reliability can also be improved.

According to a second aspect, this application provides an energy storage apparatus. The energy storage apparatus includes the battery apparatus according to any one of the multiple foregoing embodiments, where the battery apparatus is configured to store or supply electrical energy.

According to a third aspect, this application provides an energy storage system. The energy storage system includes a power conversion apparatus and the energy storage apparatus according to the foregoing embodiments, where the power conversion apparatus is configured to be electrically connected to a power generation apparatus and the energy storage apparatus.

According to a fourth aspect, this application provides an electric apparatus. The electric apparatus includes the battery apparatus, the energy storage apparatus, or the energy storage system according to the foregoing embodiments, where the battery apparatus is configured to store or supply electrical energy.

According to a fifth aspect, this application provides a charging network. The charging network includes a charging pile and the energy storage apparatus or the energy storage system according to the foregoing embodiments, where the energy storage apparatus is configured to supply electrical energy to the charging pile.

The foregoing description is merely an overview of the technical solutions of this application. For a better understanding of the technical means in this application such that they can be implemented according to the content of the specification, and to make the above and other objectives, features, and advantages of this application more obvious and easier to understand, the following describes specific embodiments of this application.

### BRIEF DESCRIPTION OF DRAWINGS

Persons of ordinary skill in the art will be clear about various other advantages and benefits by reading the detailed description of the preferred embodiments below. The accompanying drawings are merely intended to illustrate the preferred embodiments and are not intended to limit this application. In addition, in all the accompanying drawings, the same reference signs represent the same components. In the accompanying drawings:
FIG. 1 is a schematic structural diagram of a vehicle according to some embodiments of this application;
FIG. 2 is a schematic structural exploded view of a battery apparatus according to some embodiments of this application;
FIG. 3 is a schematic cross-sectional view of a battery apparatus according to some embodiments of this application;
FIG. 3a is an enlarged view of part A in FIG. 3;
FIG. 4 is another schematic cross-sectional view of a battery apparatus according to some embodiments of this application;
FIG. 4a is an enlarged view of part B in FIG. 4;
FIG. 5 is a schematic structural diagram of a battery apparatus according to some embodiments of this application;
FIG. 6 is another schematic structural diagram of a battery apparatus according to some embodiments of this application;
FIG. 7 is a vertical view of a battery apparatus according to some embodiments of this application;
FIG. 8 is another vertical view of a battery apparatus according to some embodiments of this application;
FIG. 9 is still another schematic cross-sectional view of a battery apparatus according to some embodiments of this application;
FIG. 9a is an enlarged view of part C in FIG. 9;
FIG. 10 is still another schematic cross-sectional view of a battery apparatus according to some embodiments of this application;
FIG. 10a is an enlarged view of part D in FIG. 10;
FIG. 11 is still another schematic cross-sectional view of a battery apparatus according to some embodiments of this application;
FIG. 12 is a schematic structural diagram of a pouch battery cell and flow collection channel according to some embodiments of this application;
FIG. 13 is another schematic structural diagram of a pouch battery cell and flow collection channel according to some embodiments of this application;
FIG. 14 is a schematic diagram of modules of an energy storage system according to some embodiments of this application; and
FIG. 15 is a schematic diagram of modules of a charging network according to some embodiments of this application.

Reference signs in specific embodiments are described as follows:
vehicle 1000; energy storage system 2000; charging network 3000; energy storage apparatus 1; power conversion device 2; power generation device 3; charging pile 4; connector 5;
battery apparatus 100; controller 200; motor 300;
box 10; first part 11; second part 12; inner bottom wall 13; thermal management component 14;
pouch battery cell 20; pouch housing 21; electrode lead-out portion 22; sealing portion 211; first electrode lead-out portion 221; second electrode lead-out portion 222; first sealing portion 2111; second sealing portion 2112;
liquid collection structure 30; flow collection channel 31; liquid collection tank 32; flow guide groove 33; liquid storage portion 34; recess 311; first liquid collection structure 301; second liquid collection structure 302;
insulating adhesive 40;
detection member 50;
liquid absorption member 60;
energy unit 70; housing 71; and first opening 72.

### DESCRIPTION OF EMBODIMENTS

The following describes in detail embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by persons skilled in the art to which this application relates. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

In the description of the embodiments of this application, the terms "first", "second", and the like are merely intended to distinguish between different objects, and shall not be understood as any indication or implication of relative importance or any implicit indication of the number, sequence or primary-secondary relationship of the technical features indicated. In the description of the embodiments of this application, "a plurality of" means at least two, unless otherwise specifically defined.

In this specification, reference to "embodiment" means that specific features, structures or characteristics described with reference to the embodiment may be incorporated in at least one embodiment of this application. The word "embodiment" appearing in various places in this specification does not necessarily refer to the same embodiment or an independent or alternative embodiment that is exclusive of other embodiments. Persons skilled in the art explicitly and implicitly understand that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between the contextually associated objects.

In the description of the embodiments of this application, the term "a plurality of" means more than two (inclusive). Similarly, "multiple groups" means more than two (inclusive) groups, and "multiple pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitation on the embodiments of this application.

In the description of the embodiments of this application, unless otherwise specified and defined explicitly, the technical terms "mounting", "connection", "join", and "fastening" should be understood in their general senses. For example, they may refer to a fixed connection, a detachable connection, or an integral connection, may refer to a mechanical connection or electrical connection, and may refer to a direct connection, an indirect connection via an intermediate medium, an internal communication between two elements, or an interaction between two elements. Persons of ordinary skill in the art can understand specific meanings of these terms in the embodiments of this application as suitable to specific situations.

Unless otherwise stated, all the embodiments and optional embodiments of this application can be combined with each other to form new technical solutions.

Unless otherwise stated, all the technical features and optional technical features of this application can be combined with each other to form new technical solutions.

Currently, from the perspective of market development, application of traction batteries is being more extensive. Traction batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With the continuous expansion of application fields of traction batteries, market demands for traction batteries are also increasing.

In electric vehicle applications, the structural design of a battery apparatus is directly related to both the service life and safety of a battery. The battery apparatus may include a plurality of pouch battery cell. Compared to traditional hard-shell battery cells, the pouch battery cell has the significant advantages of light weight and high energy density, which can extend the endurance range of the vehicle and reduce the overall weight. However, an aluminum-plastic film is used as a shell material of the pouch battery cell, allowing the pouch battery cell to have low overall mechanical strength and exhibit high structural fragility during use.

In the actual use, the inventors have found that sealing positions on two sides of the pouch battery cell where tabs protrude are weak regions of the structure of the pouch battery cell. These regions are not only prone to damage or cracking due to mechanical stress concentration, but also may lead to liquid leakage in the pouch battery cell. The liquid leakage may further cause system short circuits, corrosion on connection components, or even lead to failure or fires in a battery, severely affecting the safety and service life of electric vehicles.

Based on the above considerations, to alleviate the safety hazards caused by damage and liquid leakage at sealing positions of a pouch battery cell 20 where tabs protrude, this application provides a liquid collection structure 30. The liquid collection structure 30 can collect, guide, and isolate the liquid leaking from the pouch battery cell 20, thereby reducing the probability of contact between the leaked liquid and other electronic components or connection components in a battery apparatus 100, further improving the safety and reliability of the battery system.

The pouch battery cell of this application can be applied to the battery apparatus 100; and the battery apparatus 100 (Battery Apparatus) according to embodiments of this application may include one or more battery cell assemblies for providing voltage and capacity. The battery cell assembly (Battery Cell Assembly) may include a plurality of pouch battery cells 20, and the plurality of pouch battery cells 20 are connected in series, parallel, or series-parallel through busbars. Being connected in series-parallel means a combination of series and parallel connections of the plurality of pouch battery cells 20.

In some embodiments, the battery cell assembly (Battery Cell Assembly) is typically formed by arranging the plurality of pouch battery cells 20.

For example, the battery cell assembly may be a battery module (Battery module). The battery module is formed by arranging and fixing a plurality of pouch battery cells 20 into an independent module. For instance, the battery module can be formed by bundling the plurality of pouch battery cells 20 together with ties.

In some embodiments, the battery apparatus 100 may be a battery pack (Battery Pack). The battery pack includes a box 10 and one or more battery cell assemblies, where the battery cell assemblies are accommodated in the box 10.

For example, the battery cell assembly may be a battery module, and the battery cell assembly can be accommodated in the box 10 by fixing the battery module in the box 10.

For example, the battery cell assembly can alternatively be accommodated in the box 10 by directly fixing the plurality of pouch battery cells 20 in the box 10.

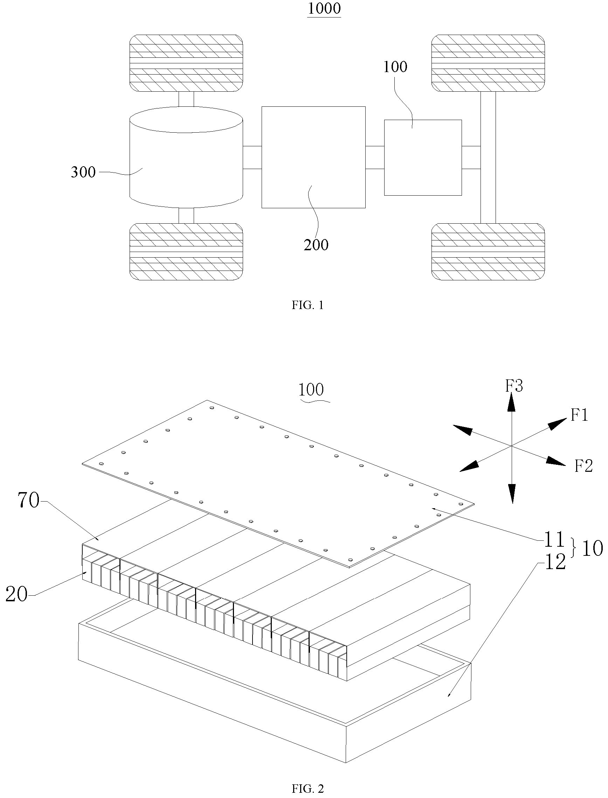

For example, referring to FIG. 2, the box 10 may include a first part 11 and a second part 12. The first part 11 and the second part 12 are snap-fitted together to form an enclosed space in the box 10 for accommodating the battery cell assembly. Here, being enclosed means being covered or closed and may refer to being sealed or non-sealed. The first part 11 may be a top cover or a bottom plate.

For example, the box 10 may include a top cover, a frame, and a bottom plate. The top cover and the bottom plate are respectively connected to the frame, so that an enclosed space is formed in the box 10 for accommodating the battery cell assembly.

In some embodiments, the box 10 can be used as a part of a chassis structure of a vehicle 1000. For example, a part of the box 10 may be at least a part of the floor of the vehicle 1000, or a part of the box 10 may be at least a part of a cross beam and longitudinal beam of the vehicle 1000.

The technical solutions described in the embodiments of this application are applicable to various electric apparatuses using the pouch battery cell 20, for example, mobile phones, portable devices, notebook computers, electric bicycles, electric toys, electric tools, vehicles, ships, and spacecrafts. For example, spacecrafts include airplanes, rockets, space shuttles, and spaceships.

For ease of description, an electric apparatus according to an embodiment of this application being a vehicle 1000 is used as an example for description of the following embodiments.

It should be noted that a liquid collection structure 30 in this embodiment of this application can collect liquid leaking from a pouch battery cell 20. The liquid may be an electrolyte, a solvent between separators, a battery additive solution, or other liquids in the pouch battery cell 20. For ease of description, liquid according to an embodiment of this application being an electrolyte is used as an example for description of the following embodiments.

Referring to FIG. 1, FIG. 1 is a schematic structural diagram of a vehicle 1000 according to some embodiments of this application. The vehicle 1000 may be a fossil fuel vehicle, a natural gas vehicle, or a new energy vehicle. The new energy vehicle may be a battery electric vehicle, a hybrid electric vehicle, a range-extended electric vehicle, or the like. The vehicle 1000 is provided with a battery apparatus 100 inside, where the battery apparatus 100 may be disposed at the bottom, front, or rear of the vehicle 1000. The battery apparatus 100 may be configured to supply power to the vehicle 1000. For example, the battery apparatus 100 may be used as an operational power source for the vehicle 1000. The vehicle 1000 may further include a controller 200 and a motor 300, where the controller 200 is configured to control the battery apparatus 100 to supply power to the motor 300, for example, to satisfy power needs of start, navigation, and driving of the vehicle 1000.

In some embodiments of this application, the battery apparatus 100 can be used as not only the operational power source for the vehicle 1000 but also a driving power source for the vehicle 1000, replacing or partially replacing fossil fuel or natural gas to provide driving traction for the vehicle 1000.

In the battery apparatus 100, a plurality of housings 71 may be provided. In one housing 71, a plurality of pouch battery cells 20 may be provided. The plurality of pouch battery cells 20 may be connected in series, parallel, or series-parallel, where being connected in series-parallel means a combination of series and parallel connections of the plurality of pouch battery cells 20. The plurality of pouch battery cells 20 may be directly connected in series, parallel, or series-parallel, and then an entirety formed by the plurality of pouch battery cells 20 is accommodated in the housing 71. A plurality of pouch battery cells 20 in a plurality of housings 71 are then connected in series, parallel, or series-parallel to form an entirety which is accommodated in the box 10. The battery apparatus 100 may further include other structures. For example, the battery apparatus 100 may further include a busbar configured to implement electrical connection between the plurality of pouch battery cells 20.

In an embodiment of this application, the pouch battery cell 20 may be a secondary battery. The secondary battery refers to a pouch battery cell 20 whose active material can be activated for continuous use through charging after the pouch battery cell 20 is discharged.

The pouch battery cell 20 may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickelcadmium battery, and a lead storage battery. This is not limited in this embodiment of this application.

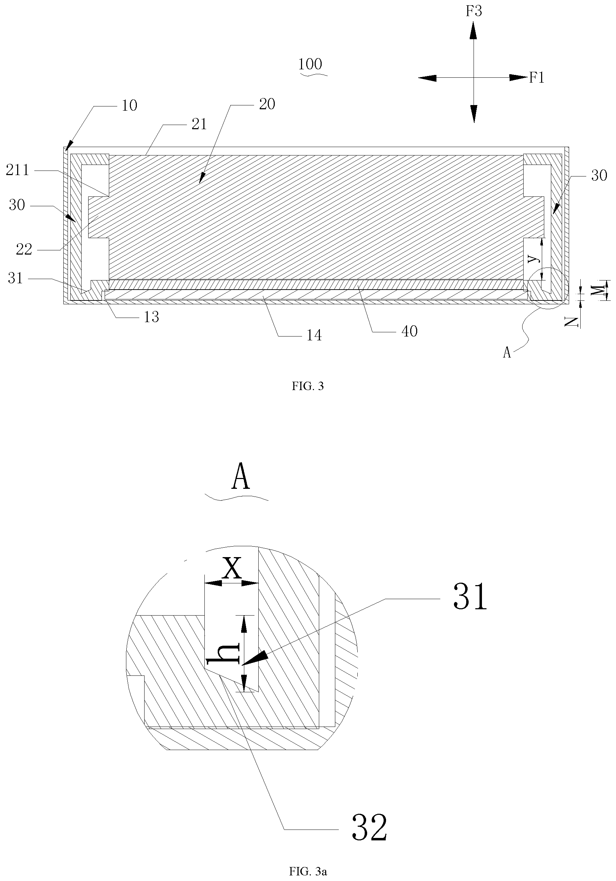

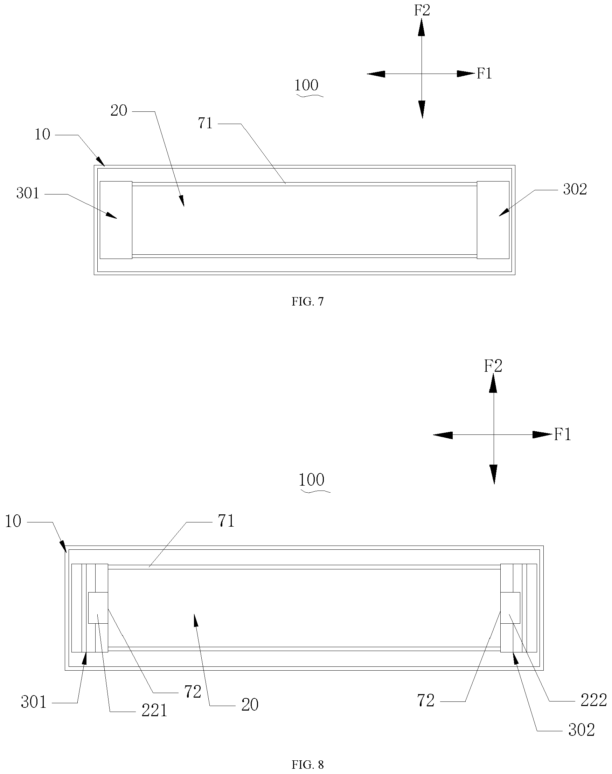

According to some embodiments of this application, referring to FIGs. 3 to 11, an embodiment of this application provides a battery apparatus 100. The battery apparatus 100 includes an energy unit 70 and a liquid collection structure 30. The energy unit 70 includes a housing 71 and a pouch battery cell 20, where the pouch battery cell 20 is located in the housing 71. The pouch battery cell 20 includes a pouch housing 21, an electrode assembly, and an electrode lead-out portion 22. The electrode assembly is sealed in the pouch housing 21, and the electrode lead-out portion 22 is at least partially located in the pouch housing 21 to be connected to the electrode assembly. The pouch housing 21 has a sealing portion 211 at an end portion in a first direction (F1), and the electrode lead-out portion 22 is at least partially exposed from the sealing portion 211. The liquid collection structure 30 is correspondingly disposed at an end portion of the pouch battery cell 20 in the energy unit 70 in the first direction, and the liquid collection structure 30 is located below the sealing portion 211.

Specifically, the pouch housing 21 is an external sealing structure of the pouch battery cell 20. Optionally, the pouch housing 21 may be made from a multilayer composite material, for example, an aluminum-plastic film. The pouch battery cell 20 may include a sealing portion 211. The sealing portion 211 is disposed at the end portion of the pouch housing 21 in the first direction; and the sealing portion 211 may have a reserved opening, hole, groove, or channel, so that the electrode lead-out portion 22 can be at least partially exposed from the sealing portion 211 to be connected to an external circuit. The electrode lead-out portion 22 and the sealing portion 211 can be connected through thermal sealing or adhesive processes to seal the pouch battery cell 20.

The electrode assembly is a part responsible for electrochemical reactions in the pouch battery cell 20, achieving the storage and release of electrical energy. The electrode assembly may include a positive electrode, a negative electrode, an electrolyte, and a separator. The positive electrode can be formed by applying a positive electrode active material (for example, lithium nickel cobalt manganese oxide or lithium iron phosphate) on an aluminum foil current collector. The negative electrode can be formed by applying a negative electrode active material (for example, graphite or silicon carbon) on a copper foil current collector. The electrolyte is a liquid or gel-like substance filled in the electrode assembly, providing an ion conduction path. The separator can be disposed between the positive electrode and the negative electrode to prevent short circuits due to the direct contact therebetween while allowing ions to move freely in the electrolyte.

The electrode lead-out portion 22 is an electrical connection end between the pouch battery cell 20 and the external circuit, which is responsible for transmitting the electrical energy in the pouch battery cell 20 to external devices. The electrode lead-out portion 22 may include a positive electrode lead-out portion and a negative electrode lead-out portion that are connected to the positive electrode and negative electrode in the electrode assembly respectively.

Further referring to FIGs. 3 to 4a and FIGs. 9 to 11, the liquid collection structure 30 is correspondingly disposed at the end portion of the pouch battery cell 20 in the energy unit 70 in the first direction and is located below the sealing portion 211. The sealing portion 211 is a position where the electrode lead-out portion 22 is mounted, which exhibits local stress concentration of the material and low mechanical strength. This may lead to the aging and deformation of the material or sealing failure during long-term use or changes in the external environment, thereby causing electrolyte leakage, leading to system-level short circuits, corrosion, and even battery failure and sparking.

The liquid collection structure 30 is correspondingly disposed at the end portion of the pouch battery cell 20 in the energy unit 70 in the first direction and is located below the sealing portion 211, which can collect an electrolyte leaking from the pouch battery cell 20 due to the damage to the sealing portion 211. This can, to some extent, avoid the problems such as system-level short circuits, corrosion, and even battery failure and sparking, thereby improving the reliability and safety of the battery apparatus 100.

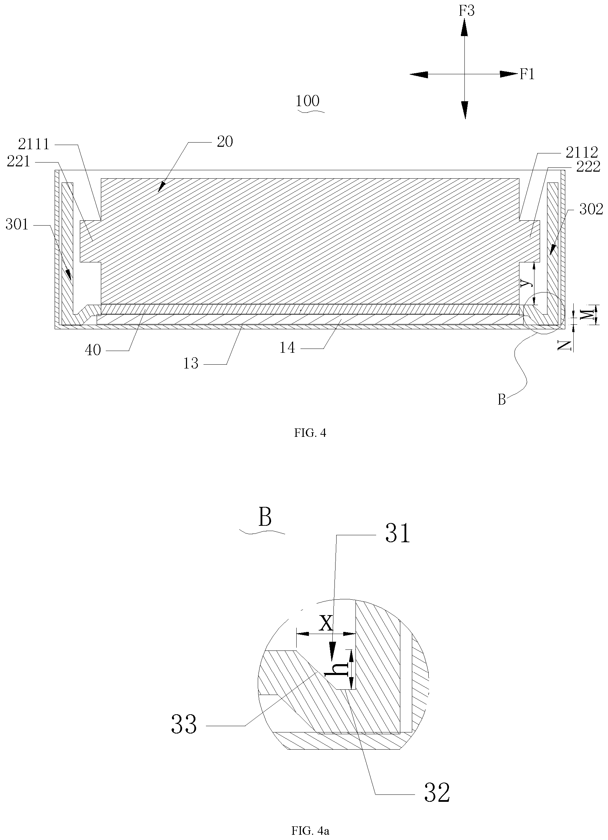

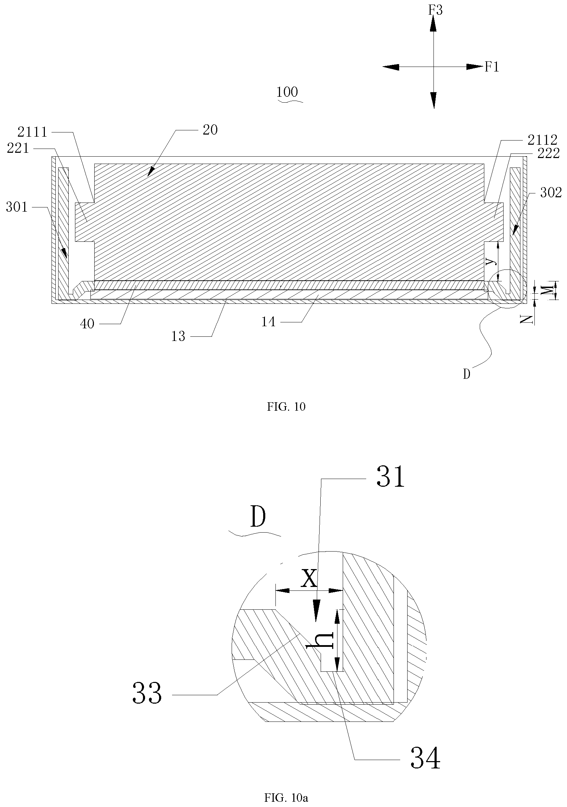

According to some embodiments of this application, optionally, referring to FIGs. 4, 4a, 10, and 10a, the electrode lead-out portion 22 includes a first electrode lead-out portion 221 and a second electrode lead-out portion 222. The first electrode lead-out portion 221 and the second electrode lead-out portion 222 are respectively located at two ends of the pouch battery cell 20 in the first direction. The sealing portion 211 includes a first sealing portion 2111 and a second sealing portion 2112. The first sealing portion 2111 is disposed corresponding to the first electrode lead-out portion 221, and the first electrode lead-out portion 221 is at least partially exposed from the first sealing portion 2111. The second sealing portion 2112 is disposed corresponding to the second electrode lead-out portion 222, and the second electrode lead-out portion 222 is at least partially exposed from the second sealing portion 2112. The liquid collection structure 30 includes a first liquid collection structure 301 and a second liquid collection structure 302. The first liquid collection structure 301 corresponds to the first sealing portion 2111 in the first direction and is located below the first sealing portion 2111. The second liquid collection structure 302 corresponds to the second sealing portion 2112 in the first direction and is located below the second sealing portion 2112.

The first sealing portion 2111 and the second sealing portion 2112 are respectively disposed at end portions of two ends of the pouch housing 21 in the pouch battery cell 20 in the first direction. The first sealing portion 2111 and the second sealing portion 2112 may each have a reserved opening, hole, groove, or channel, so that the first electrode lead-out portion 221 can be exposed from the first sealing portion 2111 to be connected to the external circuit, and the second electrode lead-out portion 222 can be exposed from the second sealing portion 2112 to be connected to the external circuit.

Correspondingly, the liquid collection structure 30 includes a first liquid collection structure 301 and a second liquid collection structure 302. The first liquid collection structure 301 is correspondingly disposed below the first sealing portion 2111 in the first direction and is used for collecting the electrolyte leaking due to the damage to the first sealing portion 2111. The second liquid collection structure 302 is set corresponding to and below the second sealing portion 2112 along the first direction, used for collecting electrolyte leaked due to the damage of the second sealing portion 2112.

It can be understood that in these embodiments, the first electrode lead-out portion 221 and the second electrode lead-out portion 222 are respectively connected to the positive electrode and negative electrode of the electrode assembly and are respectively located at two ends of the pouch battery cell 20 in the first direction. This can shorten the current path and reduce internal resistance, thereby improving the energy efficiency and power output of the pouch battery cell 20. In addition, this helps to disperse heat, thereby improving the thermal management performance of the pouch battery.

The first liquid collection structure 301 and the second liquid collection structure 302 can collect the electrolyte leaking due to the damage to the first sealing portion 2111 and the second sealing portion 2112. This can, to some extent, avoid the problems such as system-level short circuits, corrosion, and even battery failure and sparking, thereby improving the reliability and safety of the battery apparatus 100.

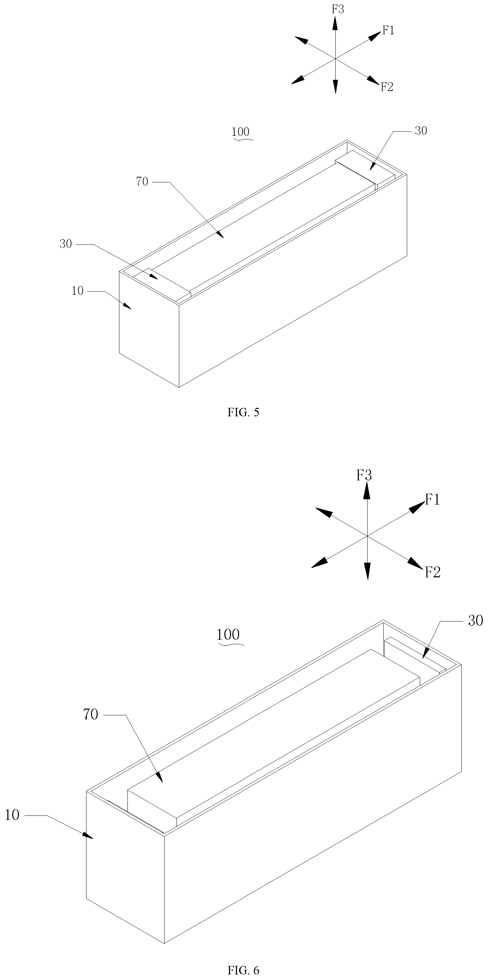

According to some embodiments of this application, optionally, referring to FIGs. 5 to 8, the energy unit 70 includes a plurality of pouch battery cells 20 placed in the housing 71. The housing 71 is provided with first openings 72 on two sides in the first direction. The battery apparatus 100 further includes two insulating members (not shown in the figure), and the two insulating members respectively cover the first openings 72 on the two sides. The first liquid collection structure 301 and the second liquid collection structure 302 are respectively disposed on the two insulating members.

Optionally, in an embodiment, the energy unit 70 may include one housing 71 and a plurality of pouch battery cells 20 disposed in the housing 71. In an embodiment, the energy unit 70 may include a plurality of housings 71, and a plurality of pouch battery cells 20 may be placed in each housing 71.

It can be understood that the housing 71 is a direct accommodating structure for the pouch battery cell 20, where an accommodating cavity is formed in the housing 71 for accommodating and protecting the pouch battery cell 20. The housing 71 can provide support and protection, preventing the pouch battery cell 20 from being damaged due to direct collision with other components in the box 10. A material of the housing 71 may include but is not limited to a metal material.

The housing 71 is provided with the first openings 72 on the two sides in the first direction. The first opening 72 allows the electrode lead-out portion 22 to be exposed from the housing 71, facilitating the electrical connection of the electrode lead-out portion 22 with the external circuit or a busbar (Busbar). The busbar (Busbar), also known as a bus bar, a bus-bar, or a current bus, is a metal conductor component used for electrical connection, and is commonly used in a battery module, a power system, or an electronic device to connect a plurality of circuits or battery cells together, thereby achieving current transmission and collection functions.

Since the busbar is typically connected to a plurality of pouch battery cells 20 or electrical devices. If the busbar is exposed without insulating protection, the busbar may result in contact with other electrical components, metal structures, or conductive substances, causing current to flow through unintended paths. Therefore, the battery apparatus 100 further includes two insulating members. The insulating members can effectively isolate the busbar from the external environment, preventing current from flowing through unintended paths to some extent. The insulating member includes but is not limited to a plastic bracket, which can support and fix the position of the busbar while isolating the busbar from the external environment.

After exposed from the first opening 72 of the housing 71, the electrode lead-out portion 22 can be connected to the busbar to achieve current transmission and collection functions. The insulating member can cover the first opening 72 to isolate the busbar from the external environment.

The first liquid collection structure 301 and the second liquid collection structure 302 can be respectively disposed on the two insulating members. When electrolyte leakage occurs at the first sealing portion 2111 and the second sealing portion 2112, the electrolyte can be collected in a timely manner. This can, to some extent, avoid the problems such as system-level short circuits, corrosion, and even battery failure and sparking, thereby improving the reliability and safety of the battery apparatus 100.

According to some embodiments of this application, optionally, referring to FIGs. 3 to 4a, the battery apparatus 100 includes a box 10. The housing 71 further includes a second opening (not shown in the figure) facing an inner bottom wall 13 of the box 10. An insulating adhesive 40 is provided between the pouch battery cell 20 and the inner bottom wall 13 of the box 10, and the insulating adhesive 40 at least partially penetrates the second opening to connect the pouch battery cell 20 and the inner bottom wall 13 of the box 10 in an insulation manner. The liquid collection structure 30 includes a liquid collection tank 32; and a minimum distance between a bottom wall of the liquid collection tank 32 and the inner bottom wall 13 of the box 10 is less than a maximum distance between an upper surface of the insulating adhesive 40 and the inner bottom wall 13 of the box 10.

The box 10 is a main protection and accommodating structure of the entire battery apparatus 100, and is a box 10 capable of providing protection. This can, to some extent, prevent the external factors from directly affecting the interior of the battery apparatus 100. The box 10 is internally provided with an inner bottom wall 13. The inner bottom wall 13 can be used for supporting the pouch battery cell 20 and providing a stable structural base for the battery apparatus 100.

The housing 71 includes a second opening facing the inner bottom wall 13 of the box 10. To be specific, the housing 71 is provided with the second opening on a side facing the inner bottom of the box 10 in a third direction (F3). The pouch battery cell 20 can be placed in the housing 71 through the second opening. The third direction is perpendicular to the first direction. In an embodiment shown in the figure, the first direction is the horizontal direction, and the third direction is the vertical direction; and the inner bottom wall 13 refers to an inner surface of the bottom of the box 10. In an embodiment, the electric apparatus is a vehicle 1000. The first direction may correspond to a front-rear direction or a left-right direction of the vehicle 1000, and the third direction may correspond to an up-down direction of the vehicle 1000.

The pouch battery cell 20 and the inner bottom wall 13 of the box 10 can be connected to each other through the insulating adhesive 40. A portion of the insulating adhesive 40 facing the pouch battery cell 20 penetrates the second opening to be connected to the pouch battery cell 20 in the housing 71, and a portion of the insulating adhesive 40 facing the inner bottom wall 13 of the box 10 is connected to the inner bottom wall 13 of the box 10, so that the pouch battery cell 20 can be fixed. The insulating adhesive 40 may include but is not limited to a thermally conductive adhesive, a structural adhesive, an ab adhesive, or a black adhesive.

The liquid collection structure 30 includes a liquid collection tank 32, where a minimum distance N between a bottom wall of the liquid collection tank 32 and the inner bottom wall 13 of the box 10 is less than a maximum distance M between an upper surface of the insulating adhesive 40 and the inner bottom wall 13 of the box 10. To be specific, in the third direction, the bottom wall of the liquid collection tank 32 is closer to the inner bottom wall 13 of the box 10 than the upper surface of the insulating adhesive 40. Since the upper surface of the insulating adhesive 40 is connected to the pouch battery cell 20, the bottom wall of the liquid collection tank 32 is closer to the inner bottom wall 13 of the box 10 than a lower surface of the pouch battery cell 20.

It can be understood that the bottom wall of the liquid collection tank 32 is closer to the inner bottom wall 13 of the box 10 than the lower surface of the pouch battery cell 20, so that when electrolyte leakage occurs, the electrolyte flows into the liquid collection tank 32 under the action of gravity such that the electrolyte can effectively concentrate to the bottom of the liquid collection tank 32, thereby ensuring the effectiveness of the liquid collection structure 30 to some extent.

The minimum distance between the bottom wall of the liquid collection tank 32 and the inner bottom wall 13 of the box 10 is less than the maximum distance between the upper surface of the insulating adhesive 40 and the inner bottom wall 13 of the box 10, so that when electrolyte leakage occurs, the electrolyte can ultimately reach the lower liquid collection tank 32, thereby implementing the collection of the leaked electrolyte.

According to some embodiments of this application, optionally, the electrode lead-out portion 22 includes a first electrode lead-out portion 221 and a second electrode lead-out portion 222. The first electrode lead-out portion 221 and the second electrode lead-out portion 222 are spaced apart at a first end portion of the pouch battery cell 20 in the first direction. The sealing portion 211 includes a first sealing portion 2111 located at the first end portion. The first electrode lead-out portion 221 and the second electrode lead-out portion 222 are both at least partially exposed from the first sealing portion 2111. The liquid collection structure 30 includes a first liquid collection structure 301. The first liquid collection structure 301 corresponds to the first sealing portion 2111 in the first direction and is located below the first sealing portion 2111.

The pouch housing 21 of the pouch battery cell 20 is provided with the first sealing portion 2111 at an end portion of an end in the first direction. The first sealing portion 2111 may each have a reserved opening, hole, groove, or channel, so that the first electrode lead-out portion 221 and the second electrode lead-out portion 222 can be exposed from the first sealing portion 2111 to be connected to the external circuit. The first electrode lead-out portion 221 and the second electrode lead-out portion 222 are insulated in the first sealing portion 2111.

Correspondingly, the liquid collection structure 30 includes a first liquid collection structure 301. The first liquid collection structure 301 is correspondingly disposed below the first sealing portion 2111 in the first direction and is used for collecting the electrolyte leaking due to the damage to the first sealing portion 2111.

It can be understood that in these embodiments, the first electrode lead-out portion 221 and the second electrode lead-out portion 222 are respectively connected to the positive electrode and negative electrode of the electrode assembly, and are located at the same end portion of the pouch battery cell 20. This can reduce the complexity of provision of a plurality of sealing channels, decrease the production complexity, and facilitate more efficient space utilization.

The first liquid collection structure 301 can collect the electrolyte leaking due to the damage to the first sealing portion 2111. This means that the first electrode lead-out portion 221 and the second electrode lead-out portion 222 can share the first liquid collection structure 301. This can, to some extent, avoid the problems such as system-level short circuits, corrosion, and even battery failure and sparking, thereby improving the reliability and safety of the battery apparatus 100. In addition, this can reduce space and material consumption required for setting a plurality of liquid collection structures 30, thereby optimizing the space utilization of the battery apparatus 100.

The first end portion may be either of the two end portions of the pouch battery cell 20 in the first direction.

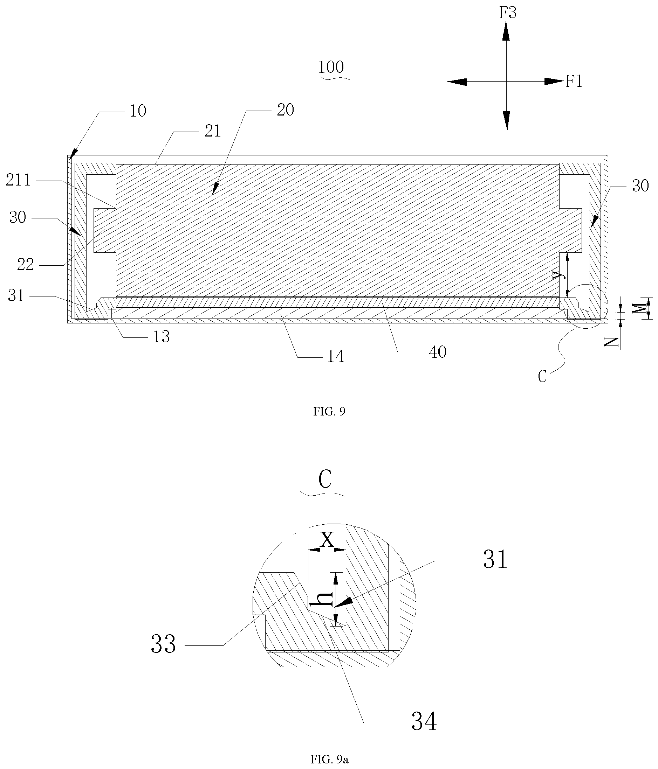

According to some embodiments of this application, optionally, referring to FIGs. 9 to 10a, the liquid collection structure 30 includes a flow guide groove 33 and a liquid storage portion 34. The flow guide groove 33 is located below the sealing portion 211. The liquid storage portion 34 is located on a side of the flow guide groove 33 facing away from the pouch battery cell 20, and the flow guide groove 33 is in communication with the liquid storage portion 34.

The liquid collection structure 30 may be provided with a flow guide groove 33. The flow guide groove 33 is a channel or groove of a specified shape, is located below the sealing portion 211 of the pouch battery cell 20, and can guide the electrolyte after leakage to flow to the liquid storage portion 34, thereby more effectively collecting the leaked electrolyte.

The liquid storage portion 34 is a storage region capable of accommodating the electrolyte and is located on the side of the flow guide groove 33 facing away from the pouch battery cell 20. The liquid storage portion 34 can accommodate and store the leaked electrolyte guided from the flow guide groove 33.

The electrolyte leaking into the system may cause safety issues such as short circuits, corrosion, and overheating in the battery. Therefore, the flow guide groove 33 and the liquid storage portion 34 can effectively control the electrolyte leakage path, allowing the electrolyte to flow into the liquid storage portion 34 further away from the pouch battery cell 20. This can, to some extent, prevent the leaked electrolyte from coming into contact with other parts of the battery apparatus 100, thereby reducing safety hazards.

The flow guide groove 33 may be a groove with a specified slope or inclination, to guide the flow of the electrolyte by utilizing gravity. The flow guide groove 33 is located below the sealing portion 211 close to the bottom of the pouch battery cell 20, thereby helping the electrolyte to rapidly flow to the liquid collection structure 30 in the event of electrolyte leakage. The shape of the flow guide groove 33 may be linear, curved, or of any shape, specifically depending on the design requirements and space layout of the battery apparatus 100.

The volume and shape of the liquid storage portion 34 can be determined based on the electrolyte capacity of the battery apparatus 100 and the expected amount of leakage.

With combination of the flow guide groove 33 and the liquid storage portion 34, the liquid collection structure 30 can more effectively guide and collect the electrolyte leaking when the sealing portion 211 of the pouch battery cell 20 is damaged. This can prevent the electrolyte from spreading to other regions to some extent, thereby improving the safety and reliability of the battery apparatus 100 and optimizing the space utilization.

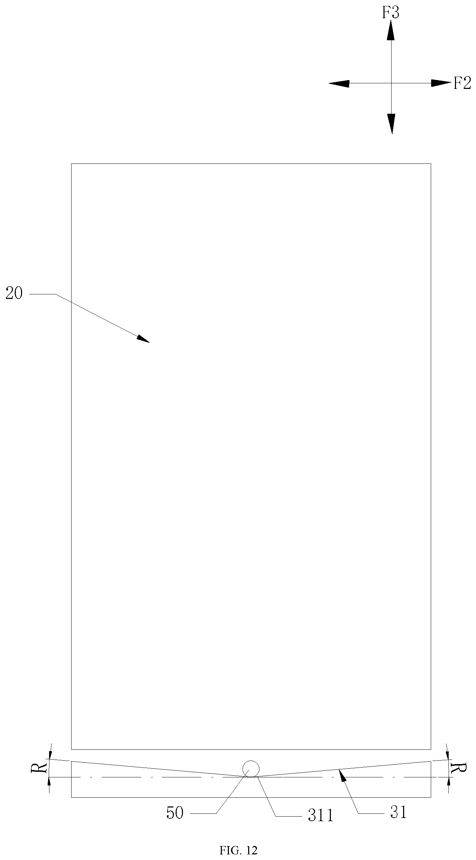

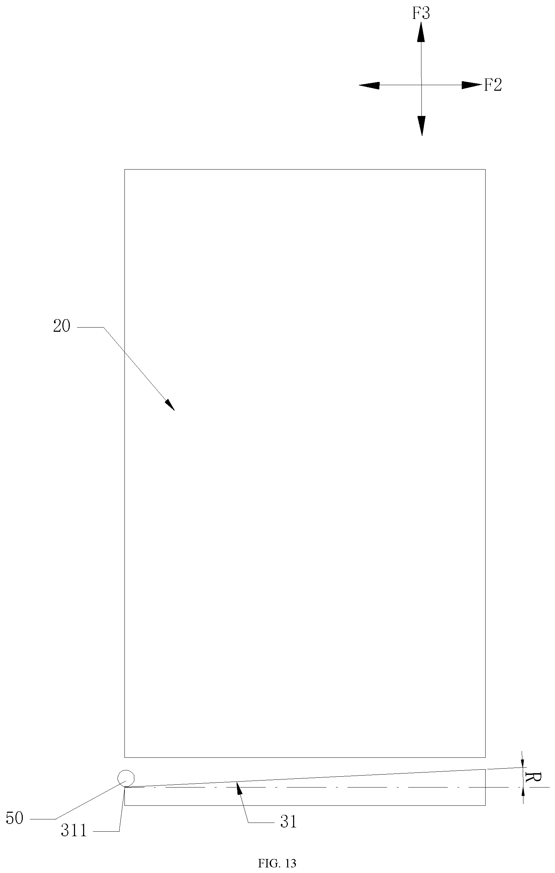

According to some embodiments of this application, optionally, referring to FIGs. 12 and 13, the battery apparatus 100 further includes a detection member 50. The detection member 50 is at least partially located in the liquid collection structure 30, and the detection member 50 is configured to detect the electrolyte in the liquid collection structure 30.

The detection member 50 is a device configured to monitor whether there is an accumulation of electrolyte in the liquid collection structure 30 and generate signals based on the presence or absence of the electrolyte. The detection member 50 can be configured to determine whether electrolyte leakage occurs and provide alarm or feedback information to facilitate the system in taking safety measures in a timely manner. Optionally, the detection member 50 may include a liquid level sensor.

The detection member 50 is at least partially located in the liquid collection structure 30. Optionally, in some embodiments, as shown in FIGs. 12 and 13, the detection member 50 is directly mounted in the liquid collection structure 30 and closely fits with a region coming into contact with the electrolyte, to accurately sense the state of the electrolyte and respond to changes of the electrolyte in a timely manner. In some embodiments, the detection member 50 includes a probe. The probe penetrates an outer wall of the liquid collection structure 30, and the probe enters the liquid collection structure 30 to maintain contact with the electrolyte, thereby avoiding complex internal integration and facilitating maintenance or replacement. In some embodiments, the detection member 50 is embedded in a part of the liquid collection structure 30 and combined with other components of the liquid collection structure 30 (such as the flow guide groove 33 and the liquid storage portion 34) to effectively monitor the electrolyte without occupying too much space.

One or more detection members 50 may be provided. In some embodiments, a plurality of detection members 50 are distributed at different positions in the liquid collection structure 30 to ensure comprehensive monitoring of electrolyte leakage.

The detection member 50 is at least partially located in the liquid collection structure 30 and configured to detect the electrolyte in the liquid collection structure 30. This can ensure the effective sensing of electrolyte leakage to some extent and transmit a detection result to a control system or an alarm system, thereby improving the safety and reliability of the battery apparatus 100.

According to some embodiments of this application, optionally, referring to FIGs. 2 to 4a and FIGs. 9 to 10a, a plurality of pouch battery cells 20 are arranged along a second direction (F2). The liquid collection structure 30 includes a flow collection channel 31. The flow collection channel 31 extends along the second direction to be located below the sealing portions 211 of all of the plurality of pouch battery cells 20. The second direction is perpendicular to the first direction.

In some embodiments, the electric apparatus is a vehicle 1000. The first direction corresponds to one of a front-rear and a left-right direction of the vehicle 1000, and the second direction corresponds to the other.

It can be understood that the plurality of pouch battery cells 20 are arranged along the second direction to form a battery cell module. A size of the battery cell module in the second direction corresponding to a size of the flow collection channel 31 in the second direction.

It should be noted that the battery cell module may correspond to one or more flow collection channels 31. In some embodiments, one battery cell module corresponds to one flow collection channel 31, and a size of the battery cell module in the second direction corresponds to a size of the flow collection channel 31 in the second direction. In some embodiments, one battery cell module corresponds to a plurality of flow collection channels 31, and a size of the battery cell module in the second direction corresponds to the sum of the sizes of the plurality of flow collection channels 31 in the second direction. Each flow collection channel 31 may correspond to at least one pouch battery cell 20. As an illustrative example, each flow collection channel 31 corresponds to four pouch battery cells 20.

The flow collection channel 31 is located below the sealing portions 211 of the plurality of pouch battery cells 20. When the sealing portion 211 of at least one pouch battery cell 20 is damaged, the leaked electrolyte can be collected into the flow collection channel 31 under the action of gravity.

It can be understood that in some embodiments, the liquid collection tank 32 extends along the second direction to be located below the sealing portions 211 of the plurality of pouch battery cells 20, thereby forming the flow collection channel 31. In the flow collection channel 31, the electrolyte leaking from the plurality of pouch battery cells 20 can flow in the flow collection channel 31. In some embodiments, a liquid storage space provided in the liquid storage portion 34 extends along the second direction to be located below the sealing portions 211 of plurality of pouch battery cells 20, thereby forming the flow collection channel 31. In the flow collection channel 31, the electrolyte leaking from the plurality of pouch battery cells 20 can flow in the flow collection channel 31.

Optionally, the flow collection channel 31 can either not enclose the sealing portion 211, partially enclose the sealing portion 211 (as shown in FIGs. 4 and 4a), or fully enclose the sealing portion 211 (as shown in FIGs. 3 and 3a). A lower enclosure degree leads to a lighter weight of the flow collection channel 31 and a lower cost. A higher enclosure degree leads to a higher structural strength of the flow collection channel 31. Persons skilled in the art can determine the enclosure degree of the flow collection channel 31 enclosing the sealing portion 211 based on actual needs. The shape of the flow collection channel 31 includes but is not limited to a semi-cylindrical shape, an irregular polygonal shape, a rectangular shape, and a triangular shape. Optionally, the flow collection channel 31 fully encloses the sealing portion 211 and is of a semi-cylindrical shape.

The flow collection channel 31 not enclosing the sealing portion 211 may mean that in the first direction, a projection of the flow collection channel 31 does not overlap with a projection of the sealing portion 211. The flow collection channel 31 partially enclosing the sealing portion 211 may mean that in the first direction, the projection of the flow collection channel 31 at least partially overlaps with the projection of the sealing portion 211, and in the third direction, the projection of the flow collection channel 31 does not overlap with the projection of the sealing portion 211 in a direction away from the inner bottom wall 13 of the box 10. The flow collection channel 31 fully enclosing the sealing portion 211 may mean that in the first direction, the projection of the flow collection channel 31 covers the projection of the sealing portion 211, and in the third direction, the projection of the flow collection channel 31 covers the projection of the sealing portion 211.

The flow collection channel 31 extends along the second direction to located below the sealing portions 211 of all of the plurality of pouch battery cells 20, so that a battery cell module can be formed to increase the overall energy storage capacity of the battery apparatus 100, satisfying the energy requirements. In addition, the flow collection channel 31 can collect an electrolyte leaking from the module. This can prevent the electrolyte from spreading to other regions to some extent, thereby improving the safety and reliability of the battery apparatus 100.

According to some embodiments of this application, optionally, referring to FIGs. 12 and 13, the battery apparatus 100 further includes a detection member 50, where the detection member 50 is at least partially located in the flow collection channel 31, and the detection member 50 is configured to detect liquid in the flow collection channel 31.

The detection member 50 is a device configured to monitor whether there is an accumulation of electrolyte in the flow collection channel 31 and generate signals based on the presence or absence of the electrolyte. The detection member 50 can be configured to determine whether electrolyte leakage occurs and provide alarm or feedback information to facilitate the system in taking safety measures in a timely manner. Optionally, the detection member 50 may include a liquid level sensor.

The detection member 50 is at least partially located in the flow collection channel 31. Optionally, in some embodiments, the detection member 50 is directly mounted in the flow collection channel 31 and closely fits with a region coming into contact with the electrolyte, to accurately sense the state of the electrolyte and respond to changes of the electrolyte in a timely manner. In some embodiments, the detection member 50 includes a probe. The probe penetrates an outer wall of the flow collection channel 31, and the probe can enter the flow collection channel 31 to maintain contact with the electrolyte, thereby avoiding complex internal integration and facilitating maintenance or replacement. In some embodiments, the detection member 50 is embedded in a part of the flow collection channel 31 and combined with other components of the flow collection channel 31 to effectively monitor the electrolyte without occupying too much space.

One or more detection members 50 may be provided. In some embodiments, a plurality of detection members 50 are distributed at different positions in the flow collection channel 31 to ensure comprehensive monitoring of electrolyte leakage.

The detection member 50 is at least partially located in the flow collection channel 31 and configured to detect an electrolyte in the liquid collection channel 31. This can ensure the effective sensing of electrolyte leakage to some extent and transmit a detection result to a control system or an alarm system, thereby improving the safety and reliability of the battery apparatus 100.

According to some embodiments of this application, optionally, referring to FIGs. 12 and 13, a bottom wall of the flow collection channel 31 is provided with a recess 311, and the detection member 50 is disposed in the recess 311.

When electrolyte leakage occurs at the pouch battery cell 20, the recess 311 can collect more of the leaked electrolyte, and the detection member 50 in the recess 311 can more rapidly sense the electrolyte leakage and transmit a detection result to a control system or an alarm system.

The bottom wall of the flow collection channel 31 is provided with the recess 311, and the detection member 50 is disposed in the recess 311, so that the leaked electrolyte can be collected in the recess 311, thereby allowing the detection member 50 to more rapidly and accurately sense the electrolyte.

According to some embodiments of this application, optionally, referring to FIGs. 12 and 13, along the second direction, a bottom wall of at least one side of the recess 311 is inclined toward the recess 311.

Referring to FIG. 12, in an embodiment, along the second direction, bottom walls of two sides of the recess 311 are inclined toward the recess 311. Referring to FIG. 13, in some embodiments, a bottom wall of one side of the recess 311 is inclined toward the recess 311.

It can be understood that along the second direction, the bottom wall of the at least one side of the recess 311 is inclined toward the recess 311, allowing the recess 311 to be located at the lowest position of the bottom wall of the flow collection channel 31. When electrolyte leakage occurs at the pouch battery cell 20, the electrolyte can be accumulated in the recess 311 under the action of gravity, thereby allowing the detection member 50 to detect the electrolyte leakage more rapidly.

Along the second direction, the bottom wall of the at least one side of the recess 311 is inclined toward the recess 311. This can guide the electrolyte to flow into the recess 311, thereby improving the detection sensitivity of the electrolyte and accelerating response time to some extent, and helping to improve the overall safety and reliability of the battery apparatus 100.

According to some embodiments of this application, optionally, referring to FIGs. 12 and 13, an inclination angle of a bottom wall of either side of the recess 311 toward the recess 311 along the second direction is R, where 0°<R≤10°.

The size of the inclination angle R affects a liquid flow direction and speed. A smaller inclination angle R means the bottom wall is relatively flat, causing the liquid to flow relatively slowly. A larger inclination angle R makes the liquid converge toward the recess 311 more rapidly.

It can be understood that persons skilled in the art can determine the inclination angle R based on comprehensive considerations such as the volume or space required for the battery apparatus 100. This is not specifically limited in this application.

In some examples, the inclination angle R is 0.5°, 1°, 2°, 3°, 4°, 5°, 6°, 7°, 8°, 9°, 10°, or another value in the range of 0°<R≤10°.

The inclination angle R satisfying 0°<R≤10° can ensure the electrolyte collection efficiency in different leakage scenarios to some extent, thereby improving the safety and reliability of the battery apparatus 100. In addition, this can, to some extent, avoid the problem of a large thickness of the liquid collection structure 30 in the third direction when the inclination angle is larger than 10°.

According to some embodiments of this application, optionally, referring to FIGs. 12 and 13, 5°≤R≤10°.

In some examples, the inclination angle R is 5°, 6°, 7°, 8°, 9°, 10°, or another value in the range of 5°≤R≤10°.

The inclination angle R satisfying 5°≤R≤10° allows the electrolyte to flow toward the recess 311 more rapidly. This reduces the retention time of the liquid in the flow collection channel 31 and implements the rapid accumulation of the leaked electrolyte, thereby improving the detection sensitivity of the electrolyte and accelerating response time to some extent, and helping to improve the overall safety and reliability of the battery apparatus 100. In addition, this can, to some extent, avoid the problem of the large thickness of the liquid collection structure 30 in the third direction when the inclination angle is larger than 10°.

In some embodiments, the battery apparatus 100 includes a plurality of detection members 50, and the bottom wall of the flow collection channel 31 is provided with a plurality of recesses 311. The plurality of detection members 50 are correspondingly disposed in different recesses 311. Bottom walls of two sides or a bottom wall of one side of each recess 311 is inclined toward the recess 311. An inclination angle of a bottom wall of either side of each recess 311 toward the recess 311 along the second direction may be equal or unequal.

According to some embodiments of this application, optionally, referring to FIGs. 3 to 4a and FIGs. 9 to 10a, a width of the flow collection channel 31 is x, where 0.5 cm≤x≤3 cm.

The size of the width x of the flow collection channel 31 affects the liquid flow speed. A smaller width x of the flow collection channel 31 means that the electrolyte encounters higher resistance when flowing in the flow collection channel 31. A larger width x of the flow collection channel 31 makes the electrolyte encounter lower resistance when flowing in the flow collection channel 31, allowing the liquid to converge toward the recess 311 more rapidly.

It can be understood that persons skilled in the art can determine the width x of the flow collection channel 31 based on comprehensive considerations such as the volume or space required for the battery apparatus 100. This is not specifically limited in this application.

In some examples, the width x of the flow collection channel 31 is 0.5 cm, 1 cm, 1.5 cm, 2 cm, 2.5 cm, 3 cm, or another value in the range of 0.5 cm≤x≤3 cm.

The width x of the flow collection channel 31 satisfying 0.5 cm≤x≤3 cm can ensure the electrolyte collection efficiency in different leakage scenarios to some extent, thereby improving the safety and reliability of the battery apparatus 100. In addition, this can, to some extent, avoid the problem of a large size of the liquid collection structure 30 in the first direction when the width x of the flow collection channel 31 is greater than 3 cm.

According to some embodiments of this application, optionally, referring to FIGs. 3 to 4a and FIGs. 9 to 10a, 0.5≤x≤1 cm.

In some examples, the width x of the flow collection channel 31 is 0.5 cm, 0.6 cm, 0.7 cm, 0.8 cm, 0.9 cm, 1 cm, or another value in the range 0.5 cm≤x≤1 cm.

In the actual use, an amount of the leaked electrolyte is often small. The width x of the flow collection channel 31 satisfying 0.5≤x≤1 cm can provide a flowing path for the leaked electrolyte, reduce the space used, and improve the compactness of the battery apparatus 100. In addition, this allows the liquid collection structure 30 to occupy less space and is conducive to improving the compactness of the battery apparatus 100.

According to some embodiments of this application, optionally, referring to FIGs. 3 to 4a and FIGs. 9 to 10a, a depth of the flow collection channel 31 is h, where 0<h≤1 cm.

The size of the depth h of the flow collection channel 31 affects the liquid flow speed. A smaller depth h of the flow collection channel 31 means that the electrolyte encounters higher resistance when flowing in the flow collection channel 31. A larger depth h of the flow collection channel 31 makes the electrolyte encounter lower resistance when flowing in the flow collection channel 31, allowing the liquid to converge toward the recess 311 more rapidly.

It can be understood that the width x and depth h of the flow collection channel 31 together define the volume of a channel space corresponding to the flow collection channel 31. A larger width x leads to a larger volume of the channel space and makes the electrolyte encounter lower resistance when flowing in the flow collection channel 31. A larger depth h leads to a larger volume of the channel space and makes the electrolyte to encounter lower resistance when flowing in the flow collection channel 31.

It can be understood that persons skilled in the art can determine the depth h of the flow collection channel 31 based on comprehensive considerations such as the volume or space required for the battery apparatus 100. This is not specifically limited in this application.

The depth h of the flow collection channel 31 satisfying 0<h≤1 cm can provide a flowing path for the leaked electrolyte and ensure the electrolyte collection efficiency in different leakage scenarios to some extent, thereby improving the safety and reliability of the battery apparatus 100.

In some examples, the depth h of the flow collection channel 31 is 0.1 cm, 0.2 cm, 0.3 cm, 0.4 cm, 0.5 cm, 0.6 cm, 0.7 cm, 0.8 cm, 0.9 cm, 1 cm, or another value in the range of 0<h≤1 cm. In an example, the depth h of the flow collection channel 31 is 0.5 cm.

In some embodiments, a distance between a side, facing the pouch battery cell 20, of the bottom wall of the flow collection channel 31 and the electrode lead-out portion 22 is y, where 0≤y≤0.5 cm.

A smaller y means that the side, facing the pouch battery cell 20, of the bottom wall of the flow collection channel 31 is closer to the electrode lead-out portion 22. To be specific, the flow collection channel 31 is closer to the sealing portion 211 prone to damage, thereby allowing the leaked electrolyte to flow into the flow collection channel 31 more quickly.

In some examples, the distance y is 0 cm, 0.1 cm, 0.2 cm, 0.3 cm, 0.4 cm, 0.5 cm, or another value in a range of 0≤y≤0.5 cm. In an example, y is 0 cm.

According to some embodiments of this application, optionally, the battery apparatus 100 includes a battery management system, where the battery management system is electrically connected to the detection member 50; and the detection member 50 is configured to send an alarm signal to the battery management system when electrolyte leakage is detected.

The battery management system (Battery Management System, BMS) is a management system configured to monitor, manage, and protect the pouch battery cell 20 in the battery apparatus 100. The battery management system ensures the operation of the pouch battery cell 20 under safe and reliable operating conditions through a series of sensors, control algorithms, and hardware devices, thereby avoiding damage to the pouch battery cell 20 or safety accidents caused by the problems such as overcharge, overdischarge, voltage imbalance, and excessively high temperatures.

The detection member 50 is a device in the battery apparatus 100 configured to sense and detect electrolyte leakage or other abnormal conditions. Through apparatuses such as sensors and detectors, the detection member 50 monitors electrolyte leakage in a real-time manner and sends an alarm signal to the battery management system when leakage occurs.

The battery management system is electrically connected to the detection member 50. When detecting electrolyte leakage, the detection member 50 can provide an alarm or feedback information to the battery management system in a timely manner. This facilitates the battery management system in taking safety measures in a timely manner, such as controlling the pouch battery cell 20 experiencing electrolyte leakage to be powered off (stopping charging or discharging).

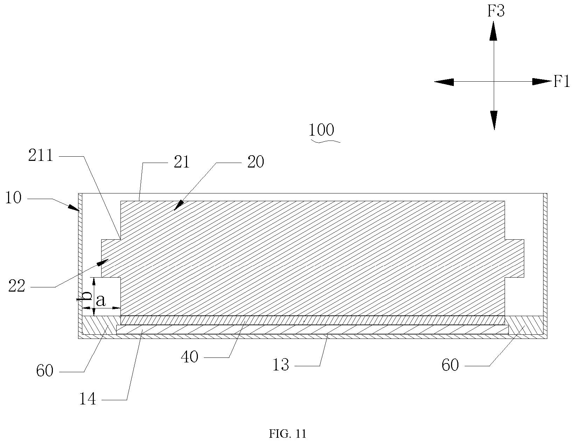

According to some embodiments of this application, optionally, referring to FIG. 11, the battery apparatus 100 further includes a liquid absorption member 60, where the liquid absorption member 60 is located in the liquid collection structure 30.

The liquid absorption member 60 is a component capable of absorbing leaked electrolyte and can be made from a material with strong water absorption property. When electrolyte leakage occurs at the battery apparatus 100, the liquid absorption member 60 can rapidly absorb the leaked electrolyte, thereby narrowing an electrolyte leakage range and avoiding to some extent the problems such as system-level short circuits, corrosion, battery failure, and sparking caused by electrolyte leakage.

The liquid absorption member 60 includes but is not limited to non-woven fabrics, foam, and resin. Optionally, the liquid absorption member 60 includes foam.

Optionally, in an embodiment, as shown in FIG. 11, the liquid absorption member 60 can adhere to an inner side wall of the box 10. Optionally, in an embodiment, the liquid absorption member 60 can be spaced from the inner side wall of the box 10.

The liquid absorption member 60 is located in the liquid collection structure 30, which can ensure the timely absorption of the electrolyte to some extent when electrolyte leakage occurs at the battery apparatus 100.

In some embodiments, referring to FIGs. 2 and 11, the plurality of pouch battery cells 20 are arranged along the second direction. The battery apparatus 100 further includes the liquid absorption member 60. The liquid absorption member 60 extends along the second direction to be located below the sealing portions 211 of all of the plurality of pouch battery cells 20. The second direction is perpendicular to the first direction.

It can be understood that the plurality of pouch battery cells 20 are arranged along the second direction to form a battery cell module. A size of the battery cell module in the second direction corresponds to a size of the liquid absorption member 60 in the second direction.

It should be noted that the battery cell module may correspond to one or more liquid absorption members 60. In some embodiments, the battery cell module corresponds to one liquid absorption member 60, and the size of the battery cell module in the second direction corresponds to the size of the liquid absorption member 60 in the second direction. In some embodiments, the battery cell module corresponds to a plurality of liquid absorption members 60. The size of the battery cell module in the second direction corresponds to the sum of the sizes of the plurality of liquid absorption members 60 in the second direction. Each liquid absorption member 60 may correspond to at least one pouch battery cell 20.

The liquid absorption member 60 is located below the sealing portions 211 of the plurality of pouch battery cells 20. When the sealing portion 211 of at least one pouch battery cell 20 is damaged, the leaked electrolyte can flow to the liquid absorption member 60 to be absorbed by the liquid absorption member 60.

The battery apparatus 100 includes the liquid absorption member 60. The plurality of pouch battery cells 20 are arranged along. The liquid absorption member 60 extends along the second direction to be located below the sealing portions 211 of all of the plurality of pouch battery cells 20. The battery cell module can be formed to increase the overall energy storage capacity of the battery apparatus 100, thereby satisfying the energy requirements and absorbing the electrolyte leaking from the battery cell module. This can prevent the electrolyte from spreading to other regions to some extent, thereby improving the safety and reliability of the battery apparatus 100.

In some embodiments, as shown in FIG. 11, a width of the liquid absorption member 60 is a, where 0.5 cm≤a≤3 cm.

The size of the width a of the liquid absorption member 60 affects the absorption capacity of the liquid absorption member 60. A smaller width a of the liquid absorption member 60 means that the liquid absorption member 60 can absorb a limited amount of electrolyte. A larger width a of the liquid absorption member 60 allows the liquid absorption member 60 to absorb more electrolyte when absorbing the electrolyte.

It can be understood that persons skilled in the art can determine the width a of the liquid absorption member 60 based on comprehensive considerations such as the volume or space required for the battery apparatus 100. This is not specifically limited in this application.

In some examples, the width a of the liquid absorption member 60 is 0.5 cm, 1 cm, 1.5 cm, 2 cm, 2.5 cm, 3 cm, or another value in the range of 0.5 cm≤a≤3 cm.

The width a of the liquid absorption member 60 satisfying 0.5 cm≤a≤3 cm can ensure the electrolyte absorption efficiency in different leakage scenarios to some extent, thereby improving the safety and reliability of the battery apparatus 100.

In some embodiments, as shown in FIG. 11, 1 cm≤a≤2 cm.

In some examples, the width a of the liquid absorption member 60 is 1 cm, 1.1 cm, 1.2 cm, 1.3 cm, 1.4 cm, 1.5 cm, 1.6 cm, 1.7 cm, 1.8 cm, 1.9 cm, 2 cm, or another value in the range of 1 cm≤a≤2 cm.

The width x satisfying 0.5≤x≤1 cm allows the liquid absorption member 60 to absorb more electrolyte, reduce the space used, and improve the compactness of the battery apparatus 100.

In some embodiments, as shown in FIG. 11, a distance between a side of the liquid absorption member 60 facing the pouch battery cell 20 and the electrode lead-out portion 22 is b, where 0≤b≤0.5 cm. In an example, b=0.

A smaller b means that the side of the liquid absorption member 60 facing the pouch battery cell 20 is closer to the electrode lead-out portion 22. To be specific, the liquid absorption member 60 is closer to the sealing portion 211 prone to damage, thereby allowing the leaked electrolyte to be absorbed more rapidly by the liquid absorption member 60.

In some examples, the distance b is 0 cm, 0.1 cm, 0.2 cm, 0.3 cm, 0.4 cm, 0.5 cm, or another value in the range of 0≤b≤0.5 cm.

In some embodiments, optionally, referring to FIGs. 3 to 4a and FIGs. 9 to 11, an inner bottom wall 13 of the box 10 is provided with a thermal management component 14.

The thermal management component 14 can provide a channel for flowing of a cooling fluid, where the cooling fluid includes but is not limited to cooling water or cooling liquid. The heat from the pouch battery cell 20 can be transferred through the insulating adhesive 40 and housing 71 to the inner bottom wall 13. When flowing, the cooling fluid can take away the heat transferred by the insulating adhesive 40 and housing 71 to achieve the purpose of cooling the pouch battery cell 20. In the battery apparatus 100, the thermal management component 14 can be arranged in a region close to the pouch battery cell 20 and is configured to perform effective thermal management using the cooling fluid when the pouch battery cell 20 generates heat during operation, helping to maintain the temperature of the battery apparatus 100 in a safe range and preventing overheating.

The inner bottom wall 13 is provided with the thermal management component 14, so that a cooling path can be provided, and the heat generated by the pouch battery cell 20 can be rapidly taken away, maintaining the pouch battery cell 20 in a suitable temperature range, thereby helping to avoid the problems such as battery performance degradation, overheating, and even thermal runaway caused by excessively high temperatures.

In some embodiments, the liquid collection structure 30 and the inner bottom wall 13 of the box 10 can be integrally formed or connected through connection methods well-known to persons skilled in the art.

According to some embodiments of this application, the pouch battery cell 20 is any one of a lithium iron phosphate battery cell, a ternary lithium battery cell, and a solid-state battery cell.

That is, in some embodiments, the pouch battery cell 20 is configured as a lithium iron phosphate battery. In some embodiments, the pouch battery cell 20 is configured as a ternary lithium battery cell. In some embodiments, the pouch battery cell 20 is configured as a solid-state battery cell.

The solid-state battery cell may be but is not limited to a polymer solid-state battery cell, an oxide solid-state battery cell, a sulfide solid-state battery cell, or a halide solid-state battery cell. The solid-state battery cell may alternatively be a semisolid-state battery cell or an all-solid-state battery cell.

In the above technical solutions, in the embodiments where the pouch battery cell is configured as a lithium iron phosphate battery cell in this application, the reliability of the pouch battery cell can be improved, and the cycle life of the pouch battery cell can be extended. In the embodiments where the pouch battery cell is configured as a ternary lithium battery cell in this application, the energy density and endurance range of the pouch battery cell can be improved. In the embodiments where the pouch battery cell is configured as a solid-state pouch battery cell, the energy density and the reliability can be improved.

According to some embodiments of this application, when the pouch battery cell 20 is a lithium iron phosphate (LiFeO₄) battery cell, a ratio of amounts of a positive electrode active material, positive electrode binder, and positive electrode conductive agent in a positive electrode material of the pouch battery cell 20 is 96:(1-3):(1-3). When the pouch battery cell 20 is a ternary lithium battery cell, a ratio of amounts of a positive electrode active material, positive electrode binder, and positive electrode conductive agent in a positive electrode material of the pouch battery cell 20 is 96:(2-3):(1-2).

It can be understood that when the pouch battery cell 20 is a lithium iron phosphate battery cell, in a positive electrode material of the pouch battery cell 20, a positive electrode active material accounts for 96 parts of the total weight of the positive electrode material, a binder accounts for 1-3 parts of the total weight of the positive electrode material (for example, the ratio may include but is not limited to 1, 1.2, 1.5, 1.8, 2, 2.2, 2.5, 2.8, and 3), and a conductive agent accounts for 1-3 parts of the total weight of the positive electrode material (for example, the ratio may include but is not limited to 1, 1.2, 1.5, 1.8, 2, 2.2, 2.5, 2.8, and 3).

For example, when the pouch battery cell 20 is a lithium iron phosphate battery cell, a positive electrode active material is LFP (which may be referred to as LiFePO₄, that is, lithium iron phosphate), a binder may be PVDF (polyvinylidene fluoride), and a conductive agent may be conductive carbon black, where a ratio of LFP, PVDF, and the conductive carbon black may be 96:2:2, that is, the total weight of the positive electrode active material is divided into 100 parts, LFP accounts for 96 parts, PVDF accounts for 2 parts, and the conductive carbon black also accounts for 2 parts. The positive electrode active material may be measured in grams.

When the pouch battery cell 20 is a ternary battery cell, in a positive electrode material in the pouch battery cell 20, a positive electrode active material accounts for 96 parts of the total weight of the positive electrode material, the binder accounts for 2-3 parts of the total weight of the positive electrode material (for example, the ratio may include but is not limited to 2, 2.2, 2.5, 2.8, and 3), and the conductive agent accounts for 1-2 parts of the total weight of the positive electrode material (for example, the ratio may include but is not limited to 1, 1.2, 1.5, 1.8, and 2). The ternary battery cell may be but is not limited to a lithium nickel cobalt manganese series, a lithium nickel cobalt aluminum series, or the like.

For example, a ternary material of the ternary battery cell may be 8-series LiNi_{0.8}Co_{0.1}Mn_{0.1}O₂. A ratio of parts by weight of the positive electrode active material, the binder, and the conductive agent is 96:2.5:1.5, that is, the total weight of the positive electrode material is divided into 100 parts, 8-series LiNi_{0.8}Co_{0.1}Mn_{0.1}O₂ accounts for 96 parts, the binder accounts for 2.5 parts, and the conductive agent accounts for 1.5 parts.

In the above technical solutions, when the pouch battery cell 20 is a lithium iron phosphate battery cell, a high proportion of positive electrode active material means that more substance capable of taking electrochemical reactions can be accommodated in the limited electrode assembly. This is conducive to increasing the capacity and energy density of the battery apparatus 100 and allows the lithium iron phosphate battery cell to output more power while maintaining a relatively small volume and weight, thereby meeting the requirements of application scenarios with certain energy density demands. The amounts of the binder and the conductive agent falling within the above ranges can reduce the costs of auxiliary materials, thereby reducing the overall cost of the battery apparatus 100. When the pouch battery cell 20 is a ternary battery cell, due to the complexity of the structure and surface properties of the ternary material, the positive electrode active material, binder, and conductive agent used at the above ratio is conducive to ensuring good adhesion between particles of the positive electrode active material, the active material, and the current collector, thereby improving the mechanical stability and integrity of the electrode assembly, reducing the risks of falling-off of the active material and electrode pulverization during charging and discharging, and extending the cycle life of the battery apparatus 100.

According to some embodiments of this application, this application further provides an energy storage apparatus 1. The energy storage apparatus 1 includes the battery apparatus 100 according to any one of the foregoing solutions, where the battery apparatus 100 is configured to store or supply electrical energy.

The energy storage apparatus 1 includes one or more battery clusters (Battery Cluster) to improve the voltage and capacity of the energy storage apparatus 1. The battery cluster may include multiple battery apparatuses 100, and the multiple battery apparatuses 100 are connected in series through bus components to increase the voltage of the energy storage apparatus 1. When the energy storage apparatus 1 includes a plurality of battery clusters, the plurality of battery clusters are connected in parallel to increase the capacity of the energy storage apparatus 1. The definition of the battery apparatus 100 is referred to the previous text and is not repeated herein.

The energy storage apparatus 1 can be used in energy storage power stations, wind power generation systems, solar power generation systems, mobile power systems, or temporary power supply systems. The energy storage apparatus 1 can store electrical energy as needed and output electrical energy at appropriate times. For example, the energy storage apparatus 1 can store electrical energy during off-peak periods of power consumption and provide electrical energy to relevant users or electric devices during peak periods of power consumption. An energy storage system 2000 provided in an embodiment of this application may be any power system requiring the use of the energy storage apparatus 1.

In some embodiments, the energy storage apparatus 1 is an energy storage container or energy storage cabinet.

In some embodiments, the energy storage apparatus 1 may include a cabinet body and one or more battery clusters, where the battery cluster is accommodated in the cabinet body.

In some embodiments, the energy storage apparatus 1 may include modules such as a thermal management module, a main control module, a general control module, a power distribution module, and a fire protection module.

For example, the thermal management module may include a liquid cooling unit, where the liquid cooling unit provides cooling liquid for adjusting the temperatures of battery cells to each battery apparatus 100 through pipes.

For example, the main control module can serve as a battery management unit of the battery cluster and is configured to monitor and manage the battery cluster. The main control module can monitor information such as the current, voltage, power, and temperature of the battery cluster. For example, the charging and discharging current and voltage of the battery cluster can be controlled. The main control module includes modules such as a slave battery management unit SBMU (Slave Battery Management Unit, SBMU) and a fusion switch.

For example, the general control module can serve as a battery management unit of the energy storage apparatus 1 and is configured to monitor and manage the energy storage apparatus 1. The general control module can monitor information such as the current, voltage, power, state of charge, or temperature of the energy storage apparatus 1. For example, the charging and discharging current and voltage of the energy storage apparatus 1 can be controlled. For example, the general control module includes modules such as an insulation monitoring module IMM (Insulation Monitoring Module, IMM for short), a master battery management unit MBMU (Master Battery Management Unit, MBMU), an ethernet ETH (EtherNet, ETH), and an optical fiber conversion module.

For example, the fire protection module includes a control panel, a detector, and an alarm apparatus and is configured to perform detection, alarm, or fire extinguishment on the energy storage system 2000.

For example, the power distribution module can be configured to distribute power to a power consumption module of the energy storage apparatus 1.

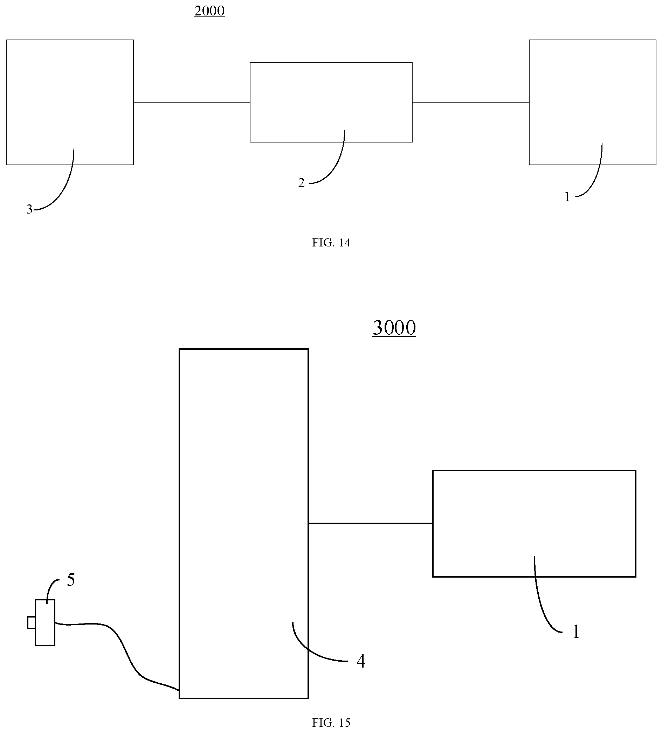

According to some embodiments of this application, referring to FIG. 14, this application further provides an energy storage system 2000. The energy storage system 2000 includes a power conversion apparatus and the energy storage apparatus 1 according to any one of the foregoing solutions, where the battery apparatus 100 is configured to store or supply electrical energy.

The energy storage system 2000 may include one or more energy storage apparatuses 1 and a power conversion device 2 (Power Converter System, PCS for short), where the power conversion device 2 is configured to be connected between a power generation device 3 and the energy storage apparatus 1. The power generation device 3 is configured to generate electrical energy, and the electrical energy generated by the power generation device 3 can be stored in the energy storage apparatus 1 through the power conversion device 2. For example, the power generation device 3 may specifically be a solar panel, a hydraulic power generation device, a thermal power generation device, and a wind power generation device. The specific type of the power generation device 3 is not limited in this application.

According to some embodiments of this application, this application further provides an electric apparatus. The electric apparatus includes the battery apparatus 100, the energy storage apparatus 1, or the energy storage system 2000 according to any one of the foregoing solutions, where the battery apparatus 100 is configured to store or supply electrical energy.

According to some embodiments of this application, referring to FIG. 15, this application further provides a charging network 3000. The charging network 3000 includes a charging pile 4 and the energy storage apparatus 1 or the energy storage system 2000 according to any one of the foregoing solutions, where the energy storage apparatus 1 is configured to supply electrical energy to the charging pile 4.

The charging network 3000 may include the charging pile 4 and the energy storage apparatus 1, where the charging pile 4 is electrically connected to the energy storage apparatus 1, and the energy storage apparatus 1 is configured to supply electrical energy to the charging pile 4. The charging pile 4 is electrically connected to the battery apparatus 100 in the energy storage apparatus 1 through a cable, and the battery apparatus 100 can supply the electrical energy stored therein to the charging pile 4. The charging pile 4 has one or more connectors 5. The connector 5 is configured to be connected to an electric device (such as the vehicle 1000) so as to supply supplementary energy to the electric device. The definition of the battery apparatus 100 is referred to the previous text and is not repeated herein.

The energy storage apparatus 1 can be located in the charging pile 4 (for example, an integrated storage and charging machine) or located outside the charging pile 4.

In conclusion, it should be noted that the above embodiments are merely intended for describing the technical solutions of this application but not for limiting this application. Although this application is described in detail with reference to the foregoing embodiments, persons of ordinary skill in the art should understand that they may still make modifications to the technical solutions described in the foregoing embodiments or make equivalent replacements to some or all technical features thereof without departing from the scope of the technical solutions of the embodiments of this application. All such modifications and equivalent replacements shall fall within the scope of the claims and specification of this application. In particular, as long as there is no structural conflict, the various technical features mentioned in the implementations can be combined in any manner. This application is not limited to the specific embodiments disclosed in this specification but includes all technical solutions falling within the scope of the claims.

## Claims

1. A battery apparatus, **characterized by** comprising:
an energy unit comprising a housing and a pouch battery cell, wherein the pouch battery cell is located in the housing, and the pouch battery cell comprises a pouch housing, an electrode assembly, and an electrode lead-out portion; the electrode assembly is sealed in the pouch housing; the electrode lead-out portion is at least partially located in the pouch housing to be connected to the electrode assembly; and the pouch housing is provided with a sealing portion at an end portion in a first direction, and the electrode lead-out portion is at least partially exposed from the sealing portion; and
a liquid collection structure, wherein the liquid collection structure is correspondingly disposed at an end portion of the pouch battery cell in the energy unit in the first direction, and the liquid collection structure is located below the sealing portion.

2. The battery apparatus according to claim 1, **characterized in that** the electrode lead-out portion comprises a first electrode lead-out portion and a second electrode lead-out portion, wherein the first electrode lead-out portion and the second electrode lead-out portion are respectively located at two ends of the pouch battery cell in the first direction; the sealing portion comprises a first sealing portion and a second sealing portion; the first sealing portion is disposed corresponding to the first electrode lead-out portion, and the first electrode lead-out portion is at least partially exposed from the first sealing portion; and the second sealing portion is disposed corresponding to the second electrode lead-out portion, and the second electrode lead-out portion is at least partially exposed from the second sealing portion; and
the liquid collection structure comprises a first liquid collection structure and a second liquid collection structure; the first liquid collection structure corresponds to the first sealing portion in the first direction and is located below the first sealing portion; and the second liquid collection structure corresponds to the second sealing portion in the first direction and is located below the second sealing portion.

3. The battery apparatus according to claim 2, **characterized in that** the energy unit comprises a plurality of pouch battery cells placed in the housing; the housing is provided with first openings on two sides in the first direction; the battery apparatus further comprises two insulating members; the two insulating members respectively cover the first openings on the two sides; and the first liquid collection structure and the second liquid collection structure are respectively disposed on the two insulating members.

4. The battery apparatus according to any one of claims 1 to 3, **characterized in that** the battery apparatus comprises a box; the housing further comprises a second opening facing an inner bottom wall of the box; an insulating adhesive is provided between the pouch battery cell and the inner bottom wall of the box; the insulating adhesive at least partially penetrates the second opening to connect the pouch battery cell and the inner bottom wall of the box in an insulation manner; the liquid collection structure comprises a liquid collection tank; a minimum distance between a bottom wall of the liquid collection tank and the inner bottom wall of the box is less than a maximum distance between an upper surface of the insulating adhesive and the inner bottom wall of the box.

5. The battery apparatus according to any one of claims 1 to 4, **characterized in that** the electrode lead-out portion comprises a first electrode lead-out portion and a second electrode lead-out portion, wherein the first electrode lead-out portion and the second electrode lead-out portion are spaced apart at a first end portion of the pouch battery cell in the first direction; the sealing portion comprises a first sealing portion located at the first end portion; and the first electrode lead-out portion and the second electrode lead-out portion are both at least partially exposed from the first sealing portion; and
the liquid collection structure comprises a first liquid collection structure, wherein the first liquid collection structure corresponds to the first sealing portion in the first direction and is located below the first sealing portion.

6. The battery apparatus according to any one of claims 1 to 5, **characterized in that** the liquid collection structure comprises a flow guide groove and a liquid storage portion, wherein the flow guide groove is located below the sealing portion; the liquid storage portion is located on a side of the flow guide groove facing away from the pouch battery cell; and the flow guide groove is in communication with the liquid storage portion.

7. The battery apparatus according to any one of claims 1 to 6, **characterized in that** the battery apparatus comprises a detection member, wherein the detection member is at least partially located in the liquid collection structure, and the detection member is configured to detect liquid in the liquid collection structure.

8. The battery apparatus according to any one of claims 1 to 7, **characterized in that** a plurality of pouch battery cells are arranged along a second direction; the liquid collection structure comprises a flow collection channel, wherein the flow collection channel extends along the second direction to be located below sealing portions of all of the plurality of pouch battery cells; and the second direction is perpendicular to the first direction.

9. The battery apparatus according to claim 8, **characterized in that** the battery apparatus comprises a detection member, wherein the detection member is at least partially located in the flow collection channel, and the detection member is configured to detect liquid in the flow collection channel.

10. The battery apparatus according to claim 9, **characterized in that** a bottom wall of the flow collection channel is provided with a recess, and the detection member is disposed in the recess.

11. The battery apparatus according to claim 10, **characterized in that** along the second direction, a bottom wall of at least one side of the recess is inclined toward the recess.

12. The battery apparatus according to claim 10 or 11, **characterized in that** an inclination angle of a bottom wall of either side of the recess toward the recess along the second direction is R, wherein 0°<R≤10°.

13. The battery apparatus according to claim 12, **characterized in that** 5°≤R≤10°.

14. The battery apparatus according to any one of claims 8 to 13, **characterized in that** a width of the flow collection channel is x, wherein 0.5 cm≤x≤3 cm.

15. The battery apparatus according to claim 14, **characterized in that** 0.5≤x≤1 cm.

16. The battery apparatus according to any one of claims 8 to 15, **characterized in that** a depth of the flow collection channel is h, wherein 0<h≤1 cm.

17. The battery apparatus according to any one of claims 7 and 9 to 13, **characterized in that** the battery apparatus comprises a battery management system, wherein the battery management system is electrically connected to the detection member; and the detection member is configured to send an alarm signal to the battery management system when liquid leakage is detected.

18. The battery apparatus according to any one of claims 1 to 17, **characterized in that** the battery apparatus further comprises a liquid absorption member, wherein the liquid absorption member is located in the liquid collection structure.

19. The battery apparatus according to any one of claims 1 to 18, **characterized in that** the pouch battery cell is any one of a lithium iron phosphate battery cell, a ternary battery cell, and a solid-state battery cell.

20. An energy storage apparatus, **characterized by** comprising a plurality of battery apparatuses according to any one of claims 1 to 19, wherein the battery apparatus is configured to store or supply electrical energy.

21. An energy storage system, **characterized by** comprising a power conversion apparatus and the energy storage apparatus according to claim 20, wherein the power conversion apparatus is configured to be electrically connected to a power generation apparatus and the energy storage apparatus.

22. An electric apparatus, **characterized by** comprising the battery apparatus according to any one of claims 1 to 19, the energy storage apparatus according to claim 20, or the energy storage system according to claim 21, wherein the battery apparatus is configured to store or supply electrical energy.

23. A charging network, **characterized by** comprising a charging pile and the energy storage apparatus according to claim 20 or the energy storage system according to claim 21, wherein the energy storage apparatus is configured to supply electrical energy to the charging pile.
